Europäisches Patentamt

European Patent Office

Office européen des brevets

(11) Veröffentlichungsnummer: **0 223 011**

**A1**

## (12) EUROPÄISCHE PATENTANMELDUNG

(21) Anmeldenummer: 86112908.8

(22) Anmeldetag: 18.09.86

(51) Int. Cl.⁴: **C08F 10/00 , C08F 4/64**

(30) Priorität: 26.10.85 DE 3538099

(43) Veröffentlichungstag der Anmeldung:
27.05.87 Patentblatt 87/22

(84) Benannte Vertragsstaaten:
AT BE CH DE FR GB IT LI LU NL SE

(71) Anmelder: **Ruhrchemie Aktiengesellschaft**
**Bruchstrasse 219**
**D-4200 Oberhausen 11(DE)**

(72) Erfinder: **Morguet, Hermann, Dr. Dipl.-Chem.**
**Rosenheimshof 14**
**D-4230 Wesel-Obrighoven(DE)**
Erfinder: **Hetkamp, Günter**
**Eichgraben 11**
**D-4220 Dinslaken(DE)**
Erfinder: **Hobes, John, Dr. Dipl.-Chem.**
**Ernastrasse 2b**
**D-4220 Dinslaken(DE)**
Erfinder: **Payer, Wolfgang, Dr. Dipl.-Chem.**
**Zedernweg 58**
**D-4230 Wesel 1(DE)**
Erfinder: **Spaleck, Walter, Dr. Dipl.-Chem.**
**Alexander-Fleming-Strasse 2**
**D-4290 Bocholt(DE)**

(74) Vertreter: **Reichelt, Karl-Heinz, Dr.**
**Ruhrchemie Aktiengesellschaft Postfach 13
01 60**
**D-4200 Oberhausen 11(DE)**

(54) Verfahren zur Homo- und Mischpolymerisation von Olefinen.

(57) Die Erfindung betrifft ein Verfahren zur Homo-und Mischpolymerisation von Olefinen nach dem Niederdruck- und dem Hochdruckverfahren. Hierbei finden Mischkatalysatoren Anwendung, die aus dem Produkt der Reaktion einer vierwertigen, halogenhaltigen Titanverbindung mit einem Magnesiumalkoholat, das mindestens 40 Gew.% Teilchen eines Durchmessers < 63 $\mu$m und höchstens 5 Gew.% Teilchen eines Durchmessers > 400 $\mu$m enthält, und einer aluminiumorganischen Verbindung bestehen.

### Verfahren zur Homo-und Mischpolymerisation von Olefinen

Die vorliegende Erfindung betrifft ein Verfahren zur Homo-und Mischpolymerisation von Olefinen.

Es ist bekannt, die Homo-und Mischpolymerisation von Olefinen in Gegenwart von Mischkatalysatoren durchzuführen, die aus dem Reaktionsprodukt einer vierwertigen, halogenhaltigen Titanverbindung mit einem Magnesiumalkoholat als Titankomponente und einer aluminiumorganischen Verbindung bestehen. Derartige Katalysatoren sind z.B. in der DE-AS 17 95 197 beschrieben. Sie werden zur Polymerisation von Olefinen der allgemeinen Formel R -CH = CH$_2$, in der R Wasserstoff oder einen Kohlenwasserstoffrest, vorzugsweise einen geradkettigen oder verzweigten, substituierten oder unsubstituierten Alkylrest mit 1 bis 10 Kohlenstoffatomen bedeutet, in Lösung, in Suspension oder in der Gasphase eingesetzt. Die Reaktion erfolgt bei Temperaturen von 20 bis 150°C, vorzugsweise 50 bis 100°C. Die Drücke betragen bis zu 20 bar.

Nach diesem Verfahren lassen sich bei Polymerisation in Suspension nur Polymerisate mit enger Molekulargewichtsverteilung in technisch befriedigender Weise herstellen.

In hoher Ausbeute werden sie erhalten, wenn man als aluminiumorganische Verbindungen Aluminiumtrialkyle einsetzt, die nach der Lehre der DE-AS 17 95 197 besonders vorteilhaft sind.

Verwendet man bei der Polymerisation in Suspension als aluminiumorganische Verbindung statt Aluminiumtrialkylen chlorhaltige Aluminiumalkyle, so erhält man Polymerisate mit breiter Molekulargewichtsverteilung. Diese Arbeitsweise hat aber den Nachteil, daß das Molekulargewicht durch Wasserstoff nur noch unzureichend geregelt werden kann. Man muß daher zur Einstellung eines bestimmten Molekulargewichts einen verhältnismäßig hohen Wasserstoffpartialdruck anwenden. Bei gegebenem Gesamtdruck, er wird durch die Ausgestaltung der Apparatur bestimmt, ist der Ethylenpartialdruck entsprechend zu erniedrigen. Dadurch wird die auf die Katalysatormenge bezogene Polymerisatausbeute deutlich vermindert und die Menge der Katalysatorrückstände im Polymerisat steigt an.

Ferner lagert sich bei der geschilderten Arbeitsweise mit chlorhaltigen Aluminiumalkylen in kontinuierlich betriebenen Polymerisationsanlagen Polymerisat an den Wänden des Reaktors und an anderen Anlageteilen ab. Die Anlage muß dann zur Reinigung abgestellt werden.

Durch Polymerisation in Suspension können also nach dem Verfahren des Standes der Technik Polymerisate mit breiter Molekulargewichtsverteilung in technisch befriedigender Weise nicht hergestellt werden.

Darüber hinaus sind die aus dem Reaktionsprodukt einer vierwertigen, halogenhaltigen Titanverbindung mit einem Magnesiumalkoholat als Titankomponente und einem Aluminiumalkyl als Aktivator bestehenden Mischkatalysatoren für die Polymerisation bei Temperaturen oberhalb etwa 150°C ungeeignet. Ihre Aktivität ist dann stark vermindert und die auf eingesetzten Katalysator bezogene Polymerisatausbeute gering.

Die genannten Mischkatalysatoren können daher in den technischen Ausführungsformen der Polymerisation mit Ziegler-Katalysatoren, die bei Temperaturen oberhalb 150°C arbeiten, nämlich der Lösungspolymerisation und der Hochdruckpolymerisation, nicht sinnvoll eingesetzt werden.

Es bestand somit die Aufgabe, ein Verfahren zur Homo-und Mischpolymerisation von Olefinen zu entwickeln, das die geschilderten Nachteile vermeidet.

Die Erfindung besteht in einem Verfahren zur Homo-und Mischpolymerisation von Olefinen der allgemeinen Formel R -CH = CH$_2$, in der R Wasserstoff oder ein geradkettiger oder verzweigter, substituierter oder unsubstituierter Alkylrest mit 1 bis 10 Kohlenstoffatomen ist, in Suspension, in Lösung oder in der Gasphase bei Temperaturen von 20 bis 250°C, vorzugsweise 50 bis 200°C und Drücken bis zu etwa 200 bar, vorzugsweise 1,5 bis 100 bar oder bei Temperaturen von 150 bis 350°C, insbesondere 180 bis 300°C und Drücken von 500 bis 3000 bar in Gegenwart von Mischkatalysatoren, die aus dem Produkt der Reaktion einer vierwertigen, halogenhaltigen Titanverbindung mit einem Magnesiumalkoholat - (Komponente A) und einer aluminiumorganischen Verbindung (Komponente B) bestehen, gegebenenfalls unter Regelung des Molekulargewichtes mit Wasserstoff. Es ist dadurch gekennzeichnet, daß man die vierwertige, halogenhaltige Titanverbindung bei 30 bis 70°C mit einem Magnesiumalkoholat umsetzt, das mindestens 40 Gew.% Teilchen eines Durchmessers <63 μm und höchstens 5 Gew.% Teilchen eines Durchmessers >400 μm enthält. Bevorzugt ist ein Mg-alkoholat, das mindestens 95 Gew.% Teilchen eines Durchmessers <63 μm enthält.

Das neue Verfahren ermöglicht die Herstellung von Produkten mit breiter Molekulargewichtsverteilung in technisch befriedigender Weise. Es erlaubt überdies die Polymerisation in einem stark erweiterten Temperatur-und Druckbereich, so daß auch Polymerisationen in Lösung und bei hohem Druck mit Erfolg durchgeführt werden können.

Es war nicht vorauszusehen, daß die Umsetzungsprodukte aus feinkörnigen Magnesiumalkoholaten bestimmter Korngrößenverteilung mit halogenhaltigen, vierwertigen Titanverbindungen sich wie vorstehend geschildert, vorteilhafter verhalten als die Umsetzungsprodukte von Magnesiumalkoholaten, bei denen auf den Körnungsgrad nicht geachtet wurde.

Zur Herstellung der Komponente A werden Magnesiumalkoholate verwendet, die der allgemeinen Formel $Mg(OR)_2$ entsprechen, in der R gleiche oder verschiedene Kohlenwasserstoffreste, vorzugsweise geradkettige oder verzweigte Alkylreste mit 1 bis 10 Kohlenstoffatomen bedeutet. Bevorzugt werden Magnesiumalkoholate, die Alkylreste mit 1 bis 4 Kohlenstoffatomen enthalten. Als Beispiele seien Magnesiummethylat, Magnesiumethylat, Magnesiumpropylat, Magnesium-iso-propylat, Magnesiumbutylat und Magnesium-iso-butylat genannt. Besonders geeignet ist Magnesiumethylat. Magnesiumalkoholat-Partikel der erfindungsgemäß geforderten Korngröße erhält man z.B. durch Mahlen von handelsüblichen Produkten in einer Kugelmühle. Auch durch Umsetzung von Magnesiumalkylen, die in geeigneten Lösungsmitteln, z.B. aliphatischen oder cycloaliphatischen Kohlenwasserstoffen wie Butan, Pentan, Hexan oder Cyclohexan gelöst sind mit Alkoholen, können sie erhalten werden.

Die Bestimmung der Korngröße und der Korngrößenverteilung der Magnesiumalkoholatpartikel erfolgt nach bekannten Arbeitsweisen. So hat es sich bewährt, das Magnesiumalkoholat in einem inerten Lösungsmittel, z.B. n-Butanol, zu suspendieren und diese Suspension zur Zerlegung möglicherweise vorhandener Agglomerate kurzzeitig, z.B. 1 min mit Ultraschall, zu behandeln. Darauf werden mit Hilfe eines Granulometers nach der Streulichtmethode Korngröße und Korngrößenverteilung gemessen. Der Kornanteil $\geq 63$ µm kann unabhängig von dem vorstehend beschriebenen Verfahren auch auf einem Luftstrahlsieb ermittelt werden.

Als Titanverbindung werden zur Herstellung der Komponente A vierwertige, halogenhaltige Verbindungen verwendet, vorzugsweise Verbindungen der allgemeinen Formel $TiX_n(OR)_{4-n}$ wobei X für Chlor und Brom, R für gleiche oder verschiedene Kohlenwasserstoffreste, insbesondere geradkettige oder verzweigte Alkylreste mit 1 bis 10 Kohlenstoffatomen stehen und n eine ganz Zahl von 1 bis 4 bedeutet. Beispiele für derartige Verbindungen sind $TiCl_4$, $Ti(OC_2H_5)_2Cl_2$, $Ti(OC_2H_5)_3Cl$, $Ti(OC_3H_7)_2Cl_2$, $Ti(OC_3H_7)_3Cl$, $Ti(OiC_3H_7)_2Cl_2$, $Ti(OiC_3H_7)_3Cl$, $Ti(OiC_4H_9)_2Cl_2$, $Ti(OiC_4H_9)_3Cl$. Bevorzugt ist $TiCl_4$.

Die Umsetzung des Magnesiumalkoholats mit der vierwertigen, halogenhaltigen Titanverbindung erfolgt erfindungsgemäß bei mäßig hohen Temperaturen von 30 bis 70°C. Besonders bewährt hat es sich, Temperaturen von 40 bis 60°C einzuhalten.

Es empfiehlt sich, das Magnesiumalkoholat zur Umsetzung mit der Titanverbindung in einem inerten Lösungsmittel zu suspendieren. Geeignet sind aliphatische oder cycloaliphatische Kohlenwasserstoffe wie Butan, Pentan, Hexan oder Cyclohexan sowie aromatische Kohlenwasserstoffe wie Benzol und Xylol. Ferner können auch hydrierte Dieselölfraktionen, die von Verunreinigungen, insbesondere Sauerstoff, Schwefelverbindungen und Feuchtigkeit befreit wurden, verwendet werden.

Im Anschluß an die Umsetzung wird das im Lösungsmittel unlösliche Reaktionsprodukt mehrfach mit einem für die Titanverbindung inerten Lösungsmittel gewaschen bis es frei von nicht umgesetzter Titanverbindung ist.

Der Titangehalt der Komponente A liegt üblicherweise im Bereich von 0,1 bis 5 mg-Atom Ti/g Komponente A. Vorzugsweise beträgt er 0,5 bis 4 mg-Atom Ti/g Komponente A. Die Höhe des Titangehaltes läßt sich durch Reaktionsdauer, Reaktionstemperatur und Konzentration der eingesetzten Titanverbindung beeinflussen.

Zur Überführung in den eigentlichen Polymerisationskatalysator muß die Komponente A mit einer aluminiumorganischen Verbindung (Komponente B) aktiviert werden.

Hierfür eignen sich Aluminiumtrialkyle der allgemeinen Formel $AlR_3$ oder Aluminiumdialkylhydride der Formel $AlR_2H$, in denen R gleiche oder verschiedene Kohlenwasserstoffreste, vorzugsweise Alkylreste mit 1 bis 18, insbesondere 2 bis 12 Kohlenstoffatomen bedeutet, wie Triethylaluminium, Triisobutylaluminium und Tri-n-octylaluminium.

Ferner können als aluminiumorganische Verbindungen die Umsetzungsprodukte aus Aluminiumtrialkylen oder Aluminiumdialkylhydriden und Diolefinen mit 4 bis 20 Kohlenstoffatomen, vorzugsweise Isopren, verwendet werden. Ein Beispiel für derartige Verbindungen ist Aluminiumisoprenyl.

Als Komponente B kommen auch halogenhaltige aluminiumorganische Verbindungen der allgemeinen Formel $R_2AlCl$, $RAlCl_2$ und $R_3Al_2Cl_3$, wobei R gleiche oder verschiedene Kohlenwasserstoffreste, vorzugsweise Alkylreste mit 1 bis 12, insbesondere 2 bis 4 Kohlenstoffatome sein können in Betracht. Beispiele für derartige Verbindungen sind $(C_2H_5)_2AlCl$ und $(C_2H_5)_3Al_2Cl_3$.

Die Aktivierung der Komponente A mit halogenfreien aluminiumorganischen Verbindungen als Komponente B ergibt insbesondere bei der Polymerisation in Suspension Produkte mit enger Molekulargewichtsverteilung. Setzt man zur Aktivierung halogenhaltige, aluminiumorganische Verbindungen als Komponente B ein, so erhält man, ebenfalls insbesondere bei der Polymerisation in Suspension, Polymerisate mit breiter Molekulargewichtsverteilung. Gleichzeitig läßt sich das Molekulargewicht ausgezeichnet mit Wasserstoff regeln; ferner werden Anbackungen im Reaktor vermieden.

Die Überführung der vierwertigen Titanverbindung (Komponente A) in die polymerisationsaktive, niedrigere Wertigkeitsstufe durch die aluminiumorganische Verbindung kann während der Polymerisation bei Temperaturen von 20 bis 350°C, vorzugsweise 60 bis 300°C erfolgen. Man kann die Aktivierung jedoch auch in zwei Schritten vornehmen, wobei die Komponente A zunächst vor der Polymerisation bei Temperaturen von -10° bis 200°C, vorzugsweise 20 bis 150°C (Voraktivierung) und darauf nochmals während der Polymerisation bei 20 bis 350°C, vorzugsweise 60 bis 300°C mit der aluminiumorganischen Verbindung behandelt wird.

Es ist auch möglich, mit der voraktivierten Komponente A eine Vorpolymerisation mit einem Olefin durchzuführen. Man erhält auf diesem Wege eine stabilisierte Komponente A, die anschließend mit einer aluminiumorganischen Verbindung (Komponente B) aktiviert und zur Hauptpolymerisation eingesetzt werden kann. Für die Voraktivierung können dieselben aluminiumorganischen Verbindungen eingesetzt werden, die auch bei der eigentlichen Aktivierung Anwendung finden. Für die Vorpolymerisation verwendet man Olefine mit 3 bis 12 Kohlenstoffatomen, insbesondere 1-Hexen.

Zur Aktivierung der Komponente A des Katalysatorsystems setzt man die Komponente B in einer solchen Menge ein, daß das Atomverhältnis von Aluminium zu Titan 0,1 : 1 bis 200 : 1 beträgt.

Die Polymerisation mit dem erfindungsgemäßen Katalysatorsystem kann in Lösung, in Suspension oder in der Gasphase, kontinuierlich oder diskontinuierlich bei Temperaturen zwischen 20 und 250°C, vorzugsweise 50 bis 200°C durchgeführt werden. Die Drücke betragen bis zu 200 bar und vorzugsweise 1,5 bis 100 bar.

Das neue Katalysatorsystem eignet sich wegen seiner Temperaturstabilität aber auch hervorragend zur Polymerisation im Hochdruckbereich, d.h. bei Drücken von etwa 500 bis etwa 3000 bar und Temperaturen von 150 bis 350°C, insbesondere 180 bis 300°C in Röhrenreaktoren oder in Autoklaven.

Mit Hilfe des neuen Katalysatorsystems können Olefine der allgemeinen Formel $R-CH = CH_2$ polymerisiert werden, wobei R Wasserstoff oder einen Kohlenwasserstoff, insbesondere einen geradkettigen oder verzweigten substituierten oder unsubstituierten Alkylrest mit 1 bis 10, vorzugsweise 1 bis 6 Kohlenstoffatomen bedeutet. Als Beispiele seien Ethylen, Propylen, Buten-(1), Penten-(1), Hexen-(1), Octen-(1) genannt. Darüber hinaus können auch Gemische von Olefinen der obigen Formel eingesetzt werden. Besonders bewährt haben sich die neuen Katalysatorsysteme zur Polymerisation von Ethylen oder Mischungen von Ethylen mit alpha-Olefine zu Copolymerisaten, die bis zu 10 Gew.%, vorzugsweise bis zu 5 Gew.% alpha-Olefine enthalten.

Das Molekulargewicht der Polymerisate läßt sich in bekannter Weise regeln, vorzugsweise mit Wasserstoff.

Nachfolgend wird das erfindungsgemäße Verfahren anhand einiger Beispiele näher erläutert. Hierbei bedeuten:

```
MFI 190/5          g/10 min      Schmelzindex gemessen bei 190°C
                                 unter einer Belastung von 5 kg

MFI 190/21,6       g/10 min      Schmelzindex gemessen bei 190°C
                                 unter einer Belastung von 21,6kg
```

$$MFR = \frac{MFI\ 190/21,6}{MFI\ 190/5}$$

Der MFR-Wert ist ein Maß für die Molekulargewichtsverteilung. Bei MFR-Werten von etwa 8 -12 liegt eine enge, bei Werten von etwa 18 -30 eine breite Molekulargewichtsverteilung vor.

4

Beispiel 1

a) Herstellung der Komponente A gemäß der Erfindung

Handelsübliches $Mg(OC_2H_5)_2$ (Produkt der Firma Dynamit Nobel) wird in einer Fliehkraftkugelmühle 24 Stunden gemahlen. Die Kornfeinheit beträgt dann 96 Gew.% <63 μm. 114 g des Mahlgutes (1 mol) werden unter Schutzgasatmosphäre in 1 l Benzin (Siedebereich 140 -170°C) suspendiert und tropfenweise bei 50°C unter starkem Rühren innerhalb 3 Stunden mit 165 ml $TiCl_4$ (1,5 mol) versetzt. Man rührt weitere 30 min bei 50°C und läßt absitzen. Die überstehende flüssige Phase wird abdekantiert und durch Frischbenzin ersetzt. Man rührt auf, läßt erneut absitzen und wiederholt diesen Waschvorgang so oft, bis die überstehende Phase titanfrei ist.

b) Polymerisation von Ethylen in Suspension unter Verwendung der nach Beispiel 1a) hergestellten Komponente A.

In einem auf 75°C vorgeheizten 3 l-Stahlautoklav werden unter Schutzgasatmosphäre zu 2 l Benzin - (Siedebereich 140 -175°C) die Komponente A (als Suspension) in einer Menge, die 0,3 mg-Atom Ti enthält und 9 mmol Diethylaluminiumchlorid (DEAC, als 1,3 m-Lösung) gegeben.

Man läßt 30 min bei 75°C rühren. Darauf leitet man Wasserstoff bis zu einem Druck von 1,5 bar und unter Rühren Ethylen bis zu einem Gesamtdruck von 4 bar ein. Bei 85°C läßt man unter Aufrechterhaltung des Druckes von 4 bar 2 Stunden polymerisieren. Das entstandene Polyethylen wird durch Filtration vom Dispergiermittel abgetrennt und getrocknet. Man erhält 297 g Polyethylen entsprechend einer Katalysatorausbeute von 0,99 kg Polyethylen/mmol Titan. Das Ergebnis der Polymerisation ist der Tabelle zu entnehmen.

Das unter Verwendung der Komponente A gemäß der Erfindung erhaltene Produkt weist eine breite Molekulargewichtsverteilung auf.

Beispiel 2

a) Herstellung der Komponente A unter Verwendung von grobteiligem $Mg(OC_2H_5)_2$.

114 g handelsübliches $Mg(OC_2H_5)_2$ (1 mol -Produkt der Firma Dynamit Nobel) mit einer Kornfeinheit von 85 Gew.% >500 μm werden unter Schutzgasatmosphäre in 1 l Benzin (Siedebereich 140 -170°C) suspendiert und unter starkem Rühren tropfenweise bei 85°C innerhalb 3 Stunden mit 165 ml $TiCl_4$ (1,5 mol) versetzt. Man rührt weitere 30 min bei 85°C und läßt absitzen. Die überstehende flüssige Phase wird abdekantiert und durch Frischbenzin ersetzt. Man rührt auf und läßt erneut absitzen und wiederholt diesen Waschvorgang, bis die überstehende Phase titanfrei ist.

b) Polymerisation von Ethylen in Suspension unter Verwendung der nach Beispiel 2a) hergestellten Komponente A.

Ethylen wird mit der nach Beispiel 2a) hergestellten Komponente A, im übrigen unter den Bedingungen des Beispiels 1b) polymerisiert. Das Ergebnis der Polymerisation ist der Tabelle zu entnehmen.

Man erkennt, daß das Polymerisat ein höheres Molekulargewicht als das nach Beispiel 1b) gewonnene Produkt hat; die gemäß Beispiel 2a) hergestellte Komponente A ergibt also einen Katalysator, der bedeutend schlechter auf Wasserstoff (als Molekulargewichtsregler) anspricht als ein Katalysator, der die nach dem erfindungsgemäßen Verfahren hergestellte Komponente A enthält.

Beispiel 3 (Vergleich)

a) Herstellung der Komponente A unter Verwendung von feinteiligem $Mg(OC_2H_5)_2$ bei Temperaturen > 70°C.

Es wird nach Beispiel 1a) gearbeitet jedoch mit dem Unterschied, daß die Umsetzung und die Nachreaktion zwischen $Mg(OC_2H_5)_2$ und $TiCl_4$ nicht bei 50°C, sondern bei 85°C erfolgt.

b) Polymerisation von Ethylen in Suspension unter Verwendung der nach Beispiel 3a) hergestellten Komponente A.

Ethylen wird mit der nach Beispiel 3a) hergestellten Komponente A, im übrigen aber unter den Bedingungen des Beispiels 1b) polymerisiert. Das Ergebnis der Polymerisation ist der Tabelle zu entnehmen.

Auch der mit der Komponente gemäß Beispiel 3a) hergestellte Katalysator spricht sehr schlecht auf Wasserstoff an.

Beispiel 4 (Vergleich)

a) Herstellung der Komponente A unter Verwendung von grobteiligem $Mg(OC_2H_5)_2$.

Es wird nach Beispiel 2a) gearbeitet mit dem Unterschied, daß die Umsetzung und die Nachreaktion zwischen $Mg(OC_2H_5)_2$ und $TiCl_4$ nicht bei 90°C, sondern bei 50°C erfolgt. Man erhält eine Komponente A mit deutlich sichtbaren Grobanteilen.

b) Polymerisation von Ethylen in Suspension unter Verwendung der nach Beispiel 4a) hergestellten Komponente A.

Ethylen wird mit der nach Beispiel 4a) hergestellten Komponente A, im übrigen unter den Bedingungen des Beispiels 1b) polymerisiert. Hinsichtlich Ausbeute und Molekulargewicht der erhaltenen Polymerisate erzielt man überaus unterschiedliche Resultate. Die Komponente A ist offensichtlich wegen ihrer Inhomogenität (Grob-und Feinanteile) nicht reproduzierbar zu dosieren und daher für eine technische Verwendung unbrauchbar.

Beispiel 5

a) Herstellung der Komponente A gemäß der Erfindung.

Zu 18 g Ethanol (0,4 mol) gelöst in 500 ml Hexan tropft man unter Rühren bei Zimmertemperatur innerhalb einer Stunde eine Lösung von 38,9 g (0,2 mol) Butyloctylmagnesium in 500 ml Hexan. Es entsteht in quantitativer Ausbeute ein weißer Niederschlag von $Mg(OC_2H_5)_2$. Zu der $Mg(OC_2H_5)_2$/Hexan-Suspension werden bei 50°C und starkem Rühren innerhalb von 2 Stunden 33 ml $TiCl_4$ (300 mmol) getropft. Man läßt unter Rühren 2 Stunden bei 50°C nachreagieren und darauf den Feststoff absitzen. Die überstehende flüssige Phase wird abdekantiert und der Feststoff wie in Beispiel 1a) gewaschen bis die überstehende Phase titanfrei ist.

b) Polymerisation von Ethylen in Suspension unter Verwendung der nach Beispiel 5a) hergestellten Komponente A.

Ethylen wird mit der nach Beispiel 5a) hergestellten Komponente A, im übrigen unter den Bedingungen des Beispiels 1b), polymerisiert.

Der Ergebnis der Polymerisation ist der Tabelle zu entnehmen. Der Katalysator spricht noch besser auf Wasserstoff an als der mit der Komponente A nach Beispiel 1a) hergestellte Katalysator.

Tabelle

| Komponente A nach Beispiel | Polymerisation nach Beispiel | Ausbeute (g) | Katalysator-ausbeute (kg PE/mg-Atom Ti) | MFI 190/5 (g/10 min) | MFI 190/21,6 (g/10 min) | MFR |
|---|---|---|---|---|---|---|
| 1 a | 1 b | 297 | 0,99 | 0,60 | 12,1 | 20,2 |
| 2 a | 2 b | 294 | 0,98 | 0,10 | 1,95 | 19,5 |
| 3 a | 3 b | 278 | 0,93 | 0,10 | 2,28 | 22,8 |
| 5 a | 5 b | 291 | 0,97 | 0,82 | 21,1 | 25,7 |

Beispiel 6

Kontinuierliche Polymerisation von Ethylen in Suspension unter Verwendung der erfindungsgemäßen Komponente A.

a) Voraktivierung der Komponente A.

Zu 800 mmol DEAC in Form einer auf 75°C erhitzten 1,3-molaren Lösung in Benzin werden unter Rühren innerhalb von 5 min 200 mmol Komponente A nach Beispiel 1a) getropft. Die Mischung wird 30 min bei 75°C gerührt und dann auf Zimmertemperatur abgekühlt.

b) Kontinuierliche Copolymerisation.

Die Copolymerisation von Ethylen mit 1-Hexen erfolgt in einem 40 l-Rührkessel, der durch ein Überlaufrohr mit einem Nachreaktor verbunden ist. Aus dem Nachreaktor wird die Polymerisatsuspension zur Trennung von fester und flüssiger Phase auf eine Filterschnecke geleitet. Das Filtrat wird in den Reaktor zurückgeführt.

In den Reaktor werden stündlich 800 l Ethylen, 60 ml 1-Hexen, 0,35 mmol voraktivierte Komponente A nach Beispiel 6a) und zusätzlich 2,1 mmol DEAC (gelöst in Benzin) eingespeist. Die Temperatur wird bei 85°C gehalten, der Reaktordruck stellt sich auf 5 bar ein. Um ein Produkt mit MFI 190/5 = 0,6 g/10 min zu erhalten, müssen 18 l Wasserstoff/h zugeführt werden, der Wasserstoffgehalt der Gasphase beträgt dann 42 Vol%.

Die Katalysatorausbeute beträgt 2,86 kg Polymerisat/mg-Atom Ti. Nach 6-tägiger Laufzeit sind die Reaktoroberfläche, der Rührer und die Stutzen zur Einspeisung der Reaktanten noch völlig frei von Anbackungen.

Beispiel 7 (Vergleich)

Kontinuierliche Copolymerisation von Ethylen mit Hexen unter Verwendung einer aus grobteiligem Magnesiumalkoholat hergestellten Komponente A.

a) Voraktivierung der Komponente A.

200 mg-Atom Ti in Form der Komponente A nach Beispiel 2a) werden analog Beispiel 6a) voraktiviert.

b) Kontinuierliche Copolymerisation.

In der Apparatur des Beispiels 6b) wird Ethylen mit 1-Hexen kontinuierlich copolymerisiert. Hierzu werden stündlich 800 l Ethylen, 60 ml 1-Hexen, 0,90 mg-Atom Ti in Form der voraktivierten Komponente A nach Beispiel 7a) und zusätzlich 5,4 mmol DEAC (gelöst in Benzin) in den Reaktor eingespeist. Die Temperatur wird bei 85°C gehalten, der Reaktordruck stellt sich auf 5 bar ein.

Um ein Produkt mit MFI 190/5 = 0,6 g/10 min zu erhalten, müssen 24 l Wasserstoff/h zugeführt werden, der Wasserstoffgehalt der Gasphase beträgt dann 65 Vol%.

Die Katalysatorausbeute beträgt 1,11 kg Polymerisat/mg-Atom Ti. Nach 3 Tagen muß die Synthese wegen starker Bildung von faden-und folienförmigen Anbackungen an Rührer, Reaktoroberfläche und Stutzen abgestellt werden.

Man erkennt, daß die nicht erfindungsgemäße Komponente A geringer auf Wasserstoff anspricht und damit im kontinuierlichen Prozeß eine geringere Aktivität hat als die erfindungsgemäße Komponente. Ferner führt sie schnell zu Anbackungen und damit zur Unterbrechung der Synthese.

Beispiel 8

Polymerisation von Ethylen in Lösung unter Verwendung einer erfindungsgemäßen Komponente A.

a) Voraktivierung und Vorpolymerisation.

20 mg-Atom Ti in Form der Komponente A des Beispiels 1a) werden unter Rühren bei 60°C innerhalb von 5 min mit 40 mmol DEAC (als 1,3 m-Lösung in Benzin) und darauf innerhalb von 10 min mit 14,8 ml 1-Hexen versetzt. Man läßt 2 h bei 60°C nachrühren.

b) Polymerisation.

In einem 3 l-Stahlautoklaven mit Magnetrührer, Temperiermantel und Bodenventil werden 2 l Benzin und 0,5 mmol voraktivierte und vorpolymerisierte Titankomponente nach Beispiel 8a) unter Schutzgas vorgelegt.

Man heizt in 20 min auf 180°C auf, pumpt in 5 min 16 ml einer 1,25 m-Lösung von DEAC (20 mmol) in Benzin zu und leitet anschließend Ethylen bei 5 bar Vordruck ein. Nach 1 h wird die Ethylenzugabe abgestellt. Nach Aufarbeitung und Trocknung erhält man 245 g Polyethylen.

Beispiel 9 (Vergleich)

Polymerisation von Ethylen in Lösung unter Verwendung einer aus grobteiligem Magnesiumalkoholat hergestellten Komponente A.

a) Voraktivierung und Vorpolymerisation.

20 mg-Atom Ti in Form der Komponente A des Beispiels 2a) werden analog Beispiel 8a) voraktiviert und vorpolymerisiert.

b) Polymerisation.

Die Polymerisation in Lösung mit der voraktivierten und vorpolymerisierten Komponente A des Beispiels 9a) wird analog Beispiel 8b) durchgeführt. Man erhält 90 g Polyethylen.

Die Aktivität der aus grobteiligem Magnesiumalkoholat hergestellten Komponente A beträgt bei Polymerisation in Lösung weniger als 40 % der Aktivität der erfindungsgemäßen Komponente A.

Beispiel 10

In einem 0,5 l-Hochdruckautoklav werden 9,5 kg/h einer Mischung aus 56 Gew.% Ethylen und 44 Gew.% 1-Hexen bei 1500 bar und 230°C copolymerisiert. Als Katalysator wird die nach Beispiel 1a) hergestellte und nach Beispiel 8a) voraktivierte und vorpolymerisierte Komponente A, wobei allerdings zur Voraktivierung anstelle von Diethylaluminiumchlorid (DEAC) Triethylaluminium (TEA) eingesetzt wurde, sowie Tri-n-octylaluminium als Aktivator (Komponente B) verwendet. Der Katalysatoreinsatz beträgt 0,9 mmol Ti/h und 6 mmol Al/h. Das Molekulargewicht wird durch Zudosieren von 0,6 Vol.% $H_2$ (bezogen auf das Olefingemisch) geregelt. Die Polymerisatschmelze wird kontinuierlich aus dem Reaktor ausgetragen und granuliert.

Der Umsatz, bezogen auf eingesetzte Olefine, beträgt 20,5 %, die Katalysatorausbeute 2,16 kg Copolymerisat/mg-Atom Ti. Das Produkt hat einen Schmelzindex (MFI 190/2,16) von 1,18 g/10 min, sein Kristallitschmelzpunkt ist 128°C.

Beispiel 11 (Vergleich)

Copolymerisation von Ethylen und 1-Hexen bei hohem Druck unter Verwendung einer nicht erfindungsgemäß hergestellten Komponente A.

Beispiel 10 wird wiederholt, jedoch unter Einsatz der nach Beispiel 2a) hergestellten und anschließend wie in Beispiel 10 voraktivierten und vorpolymerisierten Komponente A.

Zum Erreichen einer Reaktionstemperatur von 230°C müssen die Komponente A in einer Menge, die 5,25 mg-Atom Ti/h entspricht und 33 mmol Tri-n-octylaluminium/h eindosiert werden. Die Molekulargewichtsregelung erfolgt mit 0,4 Vol.% Wasserstoff (bezogen auf eingesetztes Ethylen). Der Umsatz beträgt lediglich 14,5 Gew.%, bezogen auf Gesamtmonomer, entsprechend einer Katalysatorausbeute von 0,4 kg Copolymerisat/mg-Atom Ti. Der Schmelzindex MFI 190/2,16 des Copolymerisats beträgt 0,95 g/10 min, der Kristallitschmelzpunkt 127°C.

Der Einsatz einer nicht erfindungsgemäßen Titankomponente bei der Hochdruckpolymerisation führt also zu einer deutlichen Verschlechterung der Katalysatorausbeute, verglichen mit einer erfindungsgemäßen Titankomponente.

Beispiel 12

Polymerisation von Ethylen in Suspension (Al-trialkyl als Aktivator).

In einem auf 75°C vorgeheizten 3 l-Stahlautoklav werden unter Schutzgasatmosphäre 2 l Benzin vorgelegt; es werden 0,1 mg-Atom Ti in Form der Komponente A nach Beispiel 1a) (als Suspension) und 3 mmol Triethylaluminium (als 0,8 m-Lösung in Benzin) hinzugefügt.

Man rührt 30 min bei 75°C, leitet Wasserstoff bis zu einem Druck von 0,5 bar und darauf Ethylen bis zu einem Gesamtdruck von 4,5 bar ein, der während der Polymerisation aufrechterhalten wird. Die Temperatur wird bei 85°C gehalten.

Nach 1 Stunde wird die Ethylenzufuhr abgestellt. Das entstandene Polyethylen wird durch Filtration vom Dispergiermittel abgetrennt und getrocknet.

Man erhält 480 g Polyethylen, die Katalysatorausbeute beträgt somit 4,8 kg Polyethylen/mg-Atom Ti.
Die Schmelzindices dieses Produktes betragen:
MFI 190/5 : 0,49 g/10 min
MFI 190/21,6 : 5,2 g/10 min
un der MFI-Wert

$$\frac{MFI\ 190/21,6}{MFI\ 190/5} = 10,6$$

Bei Aktivierung mit einem Aluminiumtrialkyl wird also ein Produkt mit enger Molekulargewichtsverteilung erhalten.

**Ansprüche**

1.) Verfahren zur Homo-und Mischpolymerisation von Olefinen der allgemeinen Formel R -CH = CH$_2$, in der R Wasserstoff oder ein geradkettiger oder verzweigter, substituierter oder unsubstituierter Alkylrest mit 1 bis 10 Kohlenstoffatomen ist, in Suspension, in Lösung oder in der Gasphase bei Temperaturen von 20 bis 250°C, vorzugsweise 50 bis 200°C und Drücken bis zu etwa 200 bar, vorzugsweise 1,5 bis 100 bar oder bei Temperaturen von 150 bis 350°C, insbesondere 180 bis 300°C und Drücken von 500 bis 3000 bar in Gegenwart von Mischkatalysatoren, die aus dem Produkt der Reaktion einer vierwertigen, halogenhaltigen Titanverbindung mit einem Magnesiumalkoholat (Komponente A) und einer aluminiumorganischen Verbindung (Komponente B) bestehen, gegebenenfalls unter Regelung des Molekulargewichtes mit Wasserstoff, dadurch gekennzeichnet, daß man die vierwertige halogenhaltige Titanverbindung bei 30 bis 70°C mit einem Magnesiumalkoholat umsetzt, das mindestens 40 Gew.% Teilchen eines Durchmessers <63 μm und höchstens 5 Gew.% Teilchen eines Durchmessers >400 μm enthält.

2.) Verfahren nach Anspruch 1, dadurch gekennzeichnet, daß das Magnesiumalkoholat mindestens 95 Gew.% Teilchen eines Durchmessers <63 μm enthält.

3.) Verfahren nach Anspruch 1 und 2, dadurch gekennzeichnet, daß die Magnesiumalkoholate der allgemeinen Formel $Mg(OR)_2$ entsprechen, wobei R gleiche oder verschiedene Kohlenwasserstoffreste, vorzugsweise geradkettige oder verzweigte Alkylreste mit 1 bis 10 Kohlenstoffatomen bedeutet.

4.) Verfahren nach Anspruch 3, dadurch gekennzeichnet, daß die Alkylreste 2 bis 4 Kohlenstoffatome enthalten.

5.) Verfahren nach Anspruch 1, dadurch gekennzeichnet, daß die vierwertigen halogenhaltigen Titanverbindungen der allgemeinen Formel $TiX_n(OR)_{4-n}$ entsprechen, wobei X für Chlor und Brom und R für gleiche oder verschiedene Kohlenwasserstoffreste, insbesondere geradkettige oder verzweigte Alkylreste mit 1 bis 10 Kohlenstoffatomen stehen und n eine ganze Zahl von 1 bis 4 ist.

6.) Verfahren nach Anspruch 5, dadurch gekennzeichnet, daß die vierwertige, halogenhaltige Titanverbindung $TiCl_4$ ist .

7.) Verfahren nach Anspruch 1, dadurch gekennzeichnet, daß die Umsetzung des Magnesiumalkoholats mit der vierwertigen, halogenhaltigen Titanverbindung zur Komponente A bei 40 bis 60°C erfolgt.

8.) Verfahren nach Anspruch 1, dadurch gekennzeichnet, daß man als aluminiumorganische Verbindung (Komponente B) Aluminiumtrialkyle der allgemeinen Formel $AlR_3$, Aluminiumdialkylhydride der allgemeinen Formel $AlR_2H$ oder Aluminiumisoprenyl benutzt, wobei R gleiche oder verschiedene Kohlenwasserstoffreste , vorzugsweise Alkylreste mit 1 bis 18, vorzugsweise 2 bis 12 Kohlenstoffatomen bedeutet.

9.) Verfahren nach Anspruch 1, dadurch gekennzeichnet, daß man als aluminiumorganische Verbindung (Komponente B) halogenhaltige aluminiumorganische Verbindungen der allgemeinen Formeln $R_2AlCl$, $RAlCl_2$ oder $R_3Al_2Cl_3$ benutzt, wobei R gleiche oder verschiedene Kohlenwasserstoffreste mit 1 bis 12, vorzugsweise 2 bis 4 Kohlenstoffatomen bedeutet.

10.) Verfahren nach Anspruch 1, dadurch gekennzeichnet, daß zur Aktivierung der Komponente A des Katalysatorsystems die Komponente B in einer solchen Menge eingesetzt wird, daß das Atomverhältnis von Aluminium : Titan 0,1 : 1 bis 200 : 1 beträgt.

11.) Verfahren nach Anspruch 1, dadurch gekennzeichnet, daß man Kohlenwasserstoffe der allgemeinen Formel $R-CH = CH_2$ homo-oder copolymerisiert, in der R einen Alkylrest mit 1 bis 6 Kohlenstoffatomen bedeutet.

12.) Verfahren nach Anspruch 1, dadurch gekennzeichnet, daß das Molekulargewicht der Polymerisate mit Wasserstoff geregelt wird.

Europäisches
Patentamt

**EUROPÄISCHER RECHERCHENBERICHT**

Nummer der Anmeldung

EP 86 11 2908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 095 138 (HOECHST) <br> * Patentansprüche * <br><br> --- | 1 | C 08 F 10/00 <br> C 08 F 4/64 |
| A | EP-A-0 068 257 (HOECHST) <br> * Patentansprüche * <br><br> --- | 1 | |
| D,A | FR-A-2 016 081 (HOECHST) <br> * Patentansprüche * <br><br> ----- | 1 | |

| | | | RECHERCHIERTE SACHGEBIETE (Int. Cl.4) |
|---|---|---|---|
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 13-02-1987 | DE ROECK R.G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82